# EUROPÄISCHE PATENTSCHRIFT

(11) **EP 1 235 449 B1**
(45) Veröffentlichungstag und Bekanntmachung des Hinweises auf die Patenterteilung: **14.04.2004**
(21) Anmeldenummer: 01103978.1
(22) Anmeldetag: 19.02.2001
(51) Int. Cl.: H04Q 7/38

(54) **Handover-Verfahren und Funkzugangspunkt dafür**
Handover process and corresponding radio access point
Procede de transfert et point d'access radio correspondant

(43) Veröffentlichungstag der Anmeldung: 28.08.2002
(73) Patentinhaber: SIEMENS AKTIENGESELLSCHAFT, 80333 München (DE)
(72) Erfinder: Bing, Torsten, 68159 Mannheim (DE); Bolinth, Edgar, 41189 Mönchengladbach (DE); Kadelka, Arndt, 52068 Aachen (DE); Krämling, Andreas, 52064 Aachen (DE); Lott, Matthias, 81477 München (DE); Schulz, Egon, Dr., 80993 München (DE); Wegmann, Bernhard, Dr., 83607 Holzkirchen (DE)

(56) Entgegenhaltungen:
- WO-A-98/36602
- US-A- 5 590 172
- US-A- 5 974 036
- CHENG M: "PERFORMANCE OF MOBILE-CONTROLLED HANDOFF SIGNALING IN TDMA PCS WITHAN ATM BACKBONE" IEEE VEHICULAR TECHNOLOGY CONFERENCE,US,NEW YORK, IEEE, Bd. CONF. 47, 4. Mai 1997 (1997-05-04), Seiten 406-410, XP000701830 ISBN: 0-7803-3660-7
- FRANZ W: "HIPERLAN - DER ETSI-STANDARD FUR LOKALE FUNKNETZE" NTZ NACHRICHTENTECHNISCHE ZEITSCHRIFT,DE,VDE VERLAG GMBH. BERLIN, Bd. 48, Nr. 9, 1. September 1995 (1995-09-01), Seiten 10-11,14-17, XP000528901 ISSN: 0027-707X

## Beschreibung

Die Erfindung betrifft ein Verfahren zum Übergeben einer Teilnehmerstation zwischen zwei Funkzugangspunkten eines zellularen Funkkommunikationssystems, die über eine Leitung, insbesondere ein Leitungsnetz bzw. einen Backbone des Funkkommunikationssystems verbunden sind, sowie einen Funkzugangspunkt, der für die Durchführung des Verfahrens geeignet ist.

Die Notwendigkeit, eine Teilnehmerstation zwischen zwei Funkzugangspunkten eines Funkkommunikationssystems bei laufender Verbindung zu übergeben (Handover), stellt sich bei allen derartigen Funkkommunikationssystemen, die Mobilität der Teilnehmerstationen unterstützen. Diese Übergabe soll so schnell wie möglich vonstatten gehen, damit eine dadurch verursachte kurzzeitige Unterbrechung des Datenaustauschs für einen Anwender nach Möglichkeit nicht wahrnehmbar wird.

Bei dem bekannten GSM-System überträgt im Rahmen eines Handover die Teilnehmerstation an den übernehmenden Funkzugangspunkt (Basisstation) eine HND_ACC-Nachricht, die eine temporäre Bezeichnung der Teilnehmerstation enthält. Diese Bezeichnung ermöglicht es dem übernehmenden Funkzugangspunkt, die Verbindung dieser Teilnehmerstation betreffende Informationen, die er über das Leitungsnetz (Backbone) des Systems vom übergebenden Funkzugangspunkt erhält, und die zur Weiterführung der Verbindung benötigt werden, der Teilnehmerstation zuzuordnen. Wenn diese benötigten Informationen vom übernehmenden Funkzugangspunkt empfangen und zugeordnet worden sind, kann die Verbindung mit dieser Teilnehmerstation über den übernehmenden Funkzugangspunkt fortgesetzt werden. Ein entsprechendes Handover-Verfahren ist z.B. in der US 5,590,172 dargestellt.

Dieses Verfahren hat den Nachteil, dass bevor ein Handover tatsächlich durchgeführt wird, auf Seiten des Funkkommunikationssystems bekannt sein muss, welches der die Teilnehmerstation abgebende und welches der übernehmende Funkzugangspunkt ist. Nur unter dieser Voraussetzung ist es möglich, die für die Fortsetzung der Verbindung benötigten Informationen rechtzeitig an den übernehmenden Funkzugangspunkt zu übermitteln. Voraussetzung hierfür ist, dass eine Instanz des Netzwerks, im Falle eines GSM-Netzes im allgemeinen der BSC, über die Adressinformationen verfügt, die erforderlich sind, um die für die Weiterführung der Verbindung benötigten Informationen, im folgenden auch als Verbindungsdaten bezeichnet, an den richtigen übernehmenden Funkzugangspunkt zu übermitteln.

Dies bedeutet, dass zu jedem Funkzugangspunkt eine Adressdatenbank benötigt wird, die zumindest Adressen derjenigen Funkzugangspunkte enthält, die an die Zelle des betreffenden Funkzugangspunktes angrenzende Zellen versorgen, und die dadurch als Kandidaten für die Übergabe einer laufenden Verbindung an sie oder die Übernahme einer Verbindung von ihnen im Rahmen eines Handovers in Frage kommen.

Eine solche Datenbank muss herkömmlicherweise für jeden Funkzugangspunkt einzeln erstellt werden. Wenn die Topologie des Funkkommunikationssystems bzw. des die Funkzugangspunkte verbindenden Leitungsnetzes geändert wird, z.B. weil infolge erhöhten Verkehrsaufkommens Zellen aufgeteilt werden, so bedeutet dies jedesmal, dass eine aufwendige Aktualisierung der Datenbanken nicht nur der aufgeteilten Zelle sondern auch aller benachbarten Zellen erforderlich ist.

Während nach der GSM-Norm das Funkkommunikationssystem selbst, insbesondere dessen BSC oder MSC, für eine Handover-Entscheidung zuständig ist, ist es bei Systemen wie HIPERLAN/2 die Teilnehmerstation selbst, die eine Entscheidung über die Notwendigkeit des Handover fällt. Bei einem solchen System besteht daher keine Möglichkeit, dass Verbindungsdaten an einen übernehmenden Funkzugangspunkt über das Festnetz übermittelt werden, bevor die Teilnehmerstation selbst den Funkkontakt mit dem übernehmenden Funkzugangspunkt aufnimmt. Bei solchen Systemen ist es daher üblich, Verbindungsdaten wie etwa eine Angabe über Unidirektionalität oder Bidirektionalität der Verbindung, Eigenschaften des Fehlererkennungs- und -behebungsprotokoll wie etwa die Zahl der Wiederholungen bei fehlerhafter Übermittlung eines Blocks etc. im Dialog zwischen der Teilnehmerstation und dem übernehmenden Funkzugangspunkt erneut auszuhandeln. Dies hat zur Folge, dass ein Handover-Vorgang in einem solchen System ohne weiteres mehrere 20 ms in Anspruch nehmen kann, was bei der Übertragung von zeitkritischen Daten wie insbesondere Sprache zu einer hörbaren Übertragungsunterbrechung führen kann.

Hinzu kommt, dass im Laufe der Handover-Prozedur an die Teilnehmerstation übertragene Daten im allgemeinen verloren gehen, da sie so lange vom Netzwerk an den abgebenden Funkzugangspunkt vermittelt werden, wie der Handover-Prozess nicht abgeschlossen ist.

Die Aufgabe der Erfindung besteht darin, zum einen ein Verfahren zum Übergeben einer Teilnehmerstation zwischen zwei Funkzugangspunkten anzugeben, das eine schnelle Übergabe ermöglicht, und das im Falle einer Umstrukturierung des Übertragungsnetzwerks ohne weiteren Wartungsaufwand durchführbar ist, und zum anderen einen zur Durchführung des Verfahrens geeigneten Funkzugangspunkt anzugeben.

Die Aufgabe wird durch das Verfahren mit den Merkmalen des Patentanspruchs 1 bzw. den Funkzugangspunkt mit den Merkmalen des Anspruchs 11 gelöst.

Anhand der von der Teilnehmerstation gelieferten Steuerinformation kann der übernehmende Funkzugangspunkt entscheiden, ob eine schnelle Übertragung der zur Fortsetzung der Verbindung mit der Teilnehmerstation benötigten Verbindungsdaten über die Leitung möglich ist, oder ob der langsamere Weg des Neuaushandelns dieser Daten mit der Teilnehmerstation beschritten werden muß.

Die Steuerinformation ist vorzugsweise eine Bezeichnung des abgebenden Funkzugangspunkts. In diesem Fall kann die Leitung eine Netzstruktur haben, an die eine Mehrzahl von Funkzugangspunkten angeschlossen sein können. Anhand der Bezeichnung ist der übernehmende Funkzugangspunkt in der Lage, zu entscheiden, ob er den abgebenden Funkzugangspunkt "kennt" oder nicht. Wenn er den abgebenden Funkzugangspunkt "kennt", d.h. wenn er über die nötigen Informationen verfügt, um diesen über die Leitung zu adressieren, so kann er die Verbindungsdaten über die Leitung anfordern. Wenn also die Struktur des Funkkommunikationssystems bzw. des dessen Funkzugangspunkte verbindenden Leitungsnetzes verändert worden ist und ein Funkzugangspunkt hinzugekommen ist, der dem übernehmenden Funkzugangspunkt unbekannt ist, so wird ein Handover von diesem unbekannten Funkzugangspunkt zunächst durch Übertragen der Verbindungsdaten von der Teilnehmerstation an den übernehmenden Funkzugangspunkt durchgeführt. Die Möglichkeit, von den bekannten Funkzugangspunkten Verbindungsdaten über das Leitungsnetz zu übertragen, geht aber durch eine Änderung der Netzstruktur nicht notwendigerweise verloren.

Einer ersten, einfachen Ausgestaltung des Verfahrens zufolge ist die von der Teilnehmerstation übertragene Bezeichnung des abgebenden Funkzugangspunkts innerhalb des Funkkommunikationssystems eindeutig. Ein solches Verfahren ist insbesondere für Systeme mit einer kleinen Zahl von Zugangspunkten geeignet, deren Bezeichnungen jeweils mit einer kleinen Zahl von Bits übertragbar sind. Bei dieser Ausgestaltung des Verfahrens ist der übernehmende Funkzugangspunkt allein durch den Empfang dieser Bezeichnung in der Lage, den abgebenden Funkzugangspunkt zu adressieren und die Übertragung von Verbindungsinformationen von diesem über das Festnetz zu veranlassen.

Für umfangreiche Netzwerke besser geeignet ist eine Ausgestaltung des Verfahrens, bei der die von der Teilnehmerstation übertragene Bezeichnung des abgebenden Funkzugangspunkts zu kurz ist, um einen Funkzugangspunkt netzweit eindeutig zu bezeichnen, diese Bezeichnung aber am übernehmenden Funkzugangspunkt in eine eindeutige Bezeichnung umgesetzt wird, d. h. in eine Netzwerkadresse (z. B. IP-Adresse).

Für solche netzweit eindeutig festgelegten Bezeichnungen wird im folgenden auch der Begriff Adresse verwendet.

Die nicht eindeutige Bezeichnung, die von der Teilnehmerstation jeweils an den übernehmenden Funkzugangspunkt übertragen wird, wird zweckmäßigerweise jedem Funkzugangspunkt vorab zugeteilt, wobei eine gleiche Bezeichnung mehreren Funkzugangspunkten dann zugeteilt werden darf, wenn diese nicht benachbarte Zellen versorgen. Da ein Handover jeweils im allgemeinen nur zwischen direkt benachbarten Zellen stattfindet, ist aufgrund dieser Zuteilungsvorschrift ein übernehmender Funkzugangspunkt stets in der Lage, anhand der übertragenen Bezeichnung den abgebenden Funkzugangspunkt eindeutig zu identifizieren und die Übertragung der Verbindungsdaten von diesem zu veranlassen.

Vorzugsweise ist jedem Funkzugangspunkt eine Datenbank zugeordnet, in der Adressen anderer Funkzugangspunkte jeweils in Verbindung mit zugeordneten Bezeichnungen gespeichert sind, und die Übertragung der benötigten Verbindungsdaten an den übernehmenden Funkzugangspunkt über das Festnetz wird nur veranlasst, wenn die Adresse des abgebenden Funkzugangspunkts in der Datenbank gespeichert ist.

Wenn dies nicht der Fall ist, wird ein Dialog zwischen der Teilnehmerstation und dem übernehmenden Funkzugangspunkt durchgeführt, in dem die Verbindungsdaten in im wesentlichen der gleichen Weise wie beim Aufbau einer Übertragungsverbindung ausgehandelt werden.

Besonders bevorzugt ist, dass im Rahmen dieses Dialogs auch die Adresse des abgebenden Funkzugangspunkts an den übernehmenden Funkzugangspunkt übermittelt und in dessen Datenbank gespeichert wird. Dies ermöglicht es dem übernehmenden Funkzugangspunkt, wenn erneut ein Handover von dem gleichen abgebenden Funkzugangspunkt stattfindet, anhand der übertragenen Bezeichnung auf die Datenbank zuzugreifen und in diesem Falle die Verbindungsdaten über das Leitungsnetz zu beziehen. Da die Übertragungskapazität des Leitungsnetzes im allgemeinen um ein Vielfaches höher ist als die eines Funk-Übertragungskanals zwischen der Teilnehmerstation und einem Funkzugangspunkt, ist dies wesentlich schneller möglich als das erneute Aushandeln der Verbindungsdaten im Dialog. Es wird erwartet, dass sich die für einen Handover benötigte Zeit im Rahmen eines HIPERLAN/2-Übertragungsnetzwerks auf ca. 10 ms reduziert.

Weitere Merkmale und Vorteile der Erfindung ergeben sich aus der nachfolgenden Beschreibung von Ausführungsbeispielen mit Bezug auf die beigefügten Figuren.
- Fig. 1: zeigt ein schematisches Blockdiagramm eines zellularen Funkkommunikationssystems, dessen Funkzugangspunkte zur Durchführung des erfindungsgemäßen Verfahrens eingerichtet sind;
- Fig. 2: veranschaulicht den für den Datenaustausch zwischen einem Funkzugangspunkt und einer Teilnehmerstation einerseits und dem Leitungsnetz andererseits eingesetzten Protokollstapel;
- Fig. 3: veranschaulicht den Ablauf der Signalisierung zwischen einer Teilnehmerstation und einem abgebenden und einem übernehmenden Funkzugangspunkt im Laufe eines Handovers; und
- Fig. 4: zeigt die geographische Struktur eines Funkkommunikationssystems gemäß einer Abwandlung der Erfindung.

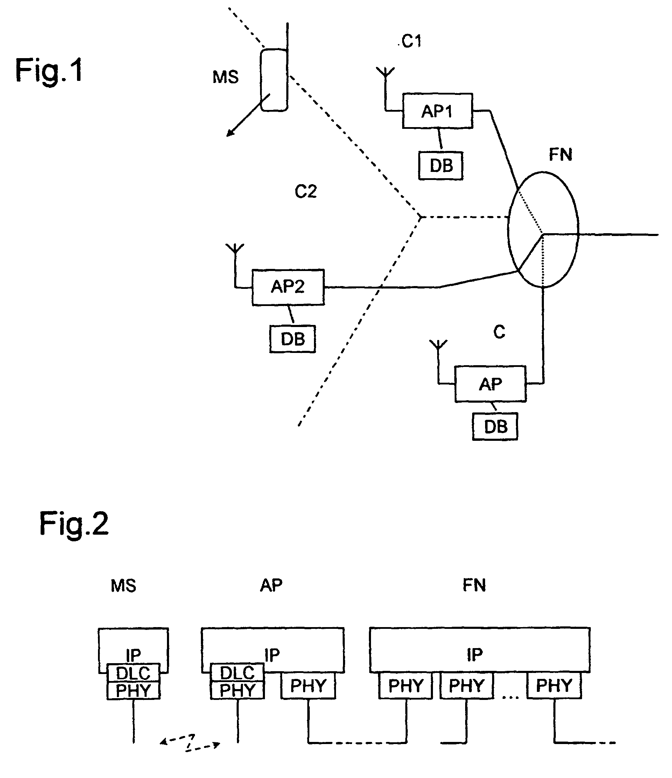

Fig. 1 zeigt stark schematisiert den Aufbau eines zellularen Funkkommunikationssystems. Es umfasst eine Vielzahl von Funkzugangspunkten, von denen nur drei, AP1, AP2, AP in der Fig. dargestellt sind. Jeder dieser Funkzugangspunkte ist in der Lage, mit Teilnehmerstationen MS zu kommunizieren, die sich in einen als Zelle C1,C2, C bezeichneten, dem Funkzugangspunkt zugeordneten geographischen Gebiet aufhalten. Grenzen zwischen Zellen sind in der Fig. als strichpunktierte Linien angedeutet. Die einzelnen Funkzugangspunkte AP1, AP2, AP sind miteinander über ein Leitungsnetz FN verbunden, das im allgemeinen in einer Mehrzahl von hierarchischen Ebenen strukturiert ist. Das Leitungsnetz FN wird hier nicht detailliert beschrieben, da für die vorliegende Erfindung allein seine herkömmliche Fähigkeit von Belang ist, Nutz- und Signalisierungsdaten zwischen Funkzugangspunkt verschiedener Zellen zu übertragen.

Das durch die Funkzugangspunkte AP1, AP2, AP und das Leitungsnetz FN gebildete Datenübertragungsnetzwerk ist beispielsweise ein IP-Netzwerk, insbesondere nach dem HIPERLAN/2-Standard.

Für jeden Funkzugangspunkt AP1, AP2, AP ist in dem Datenübertragungsnetzwerk eine Adresse eindeutig definiert, die zu über das Leitungsnetz FN zu übertragenden Datenpaketen hinzugefügt wird, um diese an einen gewünschten Funkzugangspunkt und von dort an eine sich in der Zelle des Funkzugangspunkts aufhaltende Teilnehmerstation weiterzuleiten.

Fig. 2 zeigt schematisch die Protokollstruktur der Kommunikation zwischen Teilnehmerstation MS, Funkzugangspunkt AP und Leitungsnetz FN. Während Funkzugangspunkt AP und Leitungsnetz FN jeweils mit Schnittstelleneinrichtungen für den Austausch von IP-Datenpaketen über die physikalische Protokollschicht PHY ausgestattet sind, verwenden Funkzugangspunkt und Teilnehmerstation jeweils Schnittstelleneinrichtungen mit zwischen IP-Niveau und physikalischer Schicht PHY eingeschobener Datensicherungsschicht DLC.

Aufgabe der DLC-Schicht ist die Sicherung der Datenübertragung zwischen Teilnehmerstation MS und Funkzugangspunkt AP durch die Codierung der zu übertragenden Daten und die Decodierung, Fehlersuche und gegebenenfalls -behebung in den empfangenen Daten.

Parameter der von der DLC-Schicht verwendeten Datensicherungsverfahren gehören zu den Verbindungsdaten, die bei einem Handover an den übernehmenden Funkzugangspunkt übermittelt werden müssen.

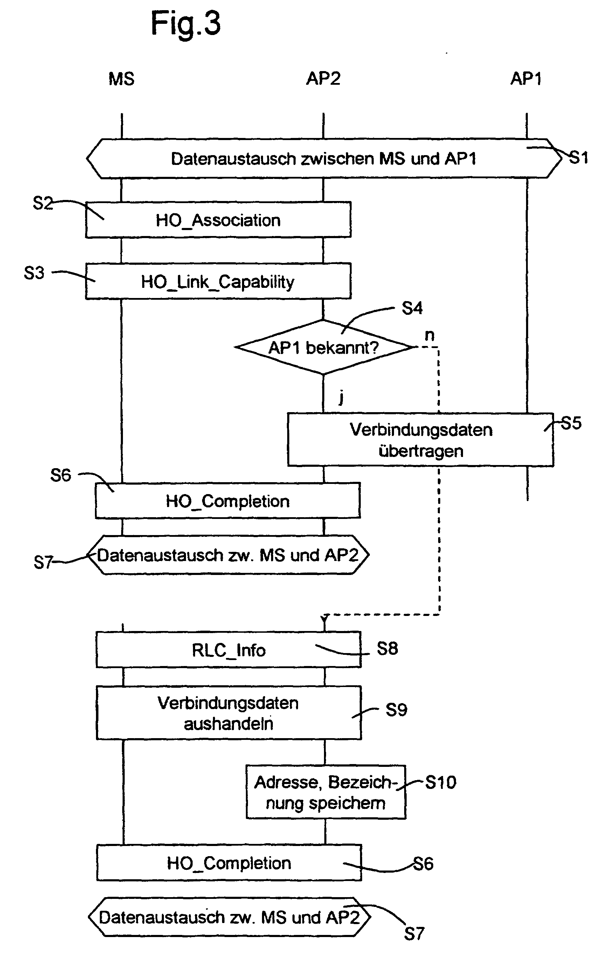

Mit Bezug auf das Signalisierungsdiagramm der Fig. 3 soll nun der Fall betrachtet werden, dass sich die in Fig. 1 gezeigte Teilnehmerstation MS von der Zelle C1 in die Zelle C2 bewegt.

Im ersten Stadium (S1) der Fig. 3 findet ein Datenaustausch zwischen der Teilnehmerstation MS und dem Funkzugangspunkt AP1 der Zelle C1 statt. Wenn mit zunehmender Entfernung der Teilnehmerstation von dem Funkzugangspunkt AP1 die Qualität der Verbindung immer weiter abnimmt, wird schließlich ein Zustand erreicht, wo die Teilnehmerstation MS die Verbindung zum Funkzugangspunkt AP1 durch eine Verbindung zum Funkzugangspunkt AP2 ersetzen muss. Zu diesem Zweck werden im Stadium S2 zunächst Meldungen "HO_Association" zwischen Teilnehmerstation MS und dem übernehmenden Funkzugangspunkt AP2 ausgetauscht, in denen sich die Teilnehmerstation MS zur Nutzung des Funkkommunikationssystems anmeldet. Der Teilnehmerstation wird eine temporäre Bezeichnung zur eindeutigen Identifizierung innerhalb der Zelle durch den übernehmenden Funkzugangspunkt zugewiesen. Dann wird im Stadium S3 durch Austausch von Meldungen "HO_Link_Capability" überprüft, ob der Funkzugangspunkt Übertragungskapazitäten verfügbar hat, um die Teilnehmerstation MS zu bedienen. Wenn ja, kann ein Handover an den Funkzugangspunkt AP2 stattfinden.

Im Rahmen der Meldungen "HO_Association" überträgt die Teilnehmerstation MS an den übernehmenden Funkzugangspunkt AP2 ferner diejenige temporäre Bezeichnung, die ihr zuvor zu ihrer Identifizierung vom abgebenden Funkzugangspunkt AP1 zugewiesen worden ist, und die von der vom übernehmenden Funkzugangspunkt AP2 zugewiesenen verschieden sein kann, und eine Bezeichnung des abgebenden Funkzugangspunkts AP1, die vom abgebenden Funkzugangspunkt AP1 zuvor beim Aufbau der Verbindung mit diesem an die Teilnehmerstation MS übertragen worden sind.

Die Bezeichnung des Funkzugangspunktes muss nicht für jeden Funkzugangspunkt des gesamten Funkkommunikationssystems eindeutig sein. Wenn man idealisierend.annimmt, dass die Zellen des Funkkommunikationssystems ein flächendeckendes Muster von gleich großen Sechsecken bilden, so genügen sieben verschiedene Bezeichnungen, um jeden Funkzugangspunkt eindeutig von den Funkzugangspunkten der benachbarten Zellen zu unterscheiden.

Da in der Praxis eine solche Sechseckstruktur der Zellen im allgemeinen nicht erzielt wird, und auch die Möglichkeit bestehen soll, Zellen aufzuteilen, ohne dass dies tiefgreifende Umstrukturierungen des Übertragungsnetzwerks erfordert, wird die Zahl der verwendeten Bezeichnungen im allgemeinen größer sein. Man kann aber davon ausgehen, dass für die Zwecke der Erfindung eine Bezeichnung von 5 oder 6 Bit Länge, die 32 bzw. 64 verschiedene Werte annehmen kann, genügt. Diese nicht notwendigerweise eindeutige Bezeichnung wird nur in der Signalisierung zwischen Teilnehmerstation MS und Funkzugangspunkt AP1 oder AP2 verwendet. In HIPERLAN/2 werden Bezeichnungen von 10 Bit Länge verwendet, sogenannte "DLC"-Adressen. Die genaue Länge ist für die Erfindung jedoch nicht wichtig. Wichtig ist, dass mit der Bezeichnung keine Nachrichten im Leitungsnetz geroutet werden. Hierfür werden bei HIPERLAN/2 IP-Adressen verwendet.

Nachdem der übernehmende Funkzugangspunkt AP2 festgestellt hat, dass Übertragungskapazität für die Teilnehmerstation MS zur Verfügung steht, überprüft er in einer zugeordneten Datenbank DB (siehe Fig. 1), ob die von der Teilnehmerstation MS übertragene Bezeichnung des abgebenden Funkzugangspunkts AP1 bekannt ist (S4). D.h. er überprüft nun, ob in der Datenbank DB zu der von der Teilnehmerstation MS übertragenen Bezeichnung eine Adresse gespeichert ist, die vom übernehmenden Funkzugangspunkt AP2 verwendet werden kann, um eine Signalisierungsnachricht über das Leitungsnetz FN an den abgebenden Funkzugangspunkt AP1 zu senden.

Wenn eine solche Adresse in der Datenbank DB vorhanden ist, sendet der übernehmende Funkzugangspunkt AP2 unter Verwendung dieser Adresse an den abgebenden Funkzugangspunkt AP1 eine Anforderung zur Übertragung der Verbindungsdaten über das Leitungsnetz FN (S5).

Diese Anforderung enthält die zuvor im Rahmen der Meldungen "HO_Association" an den übernehmenden Funkzugangspunkt AP2 übertragene temporäre Bezeichnung der Teilnehmerstation MS. Anhand dieser temporären Bezeichnung ist der abgebende Funkzugangspunkt AP1 in der Lage, unter den von ihm verwalteten Verbindungsdaten einer Vielzahl von Teilnehmerstationen die benötigten zu identifizieren, um sie an den übernehmenden Funkzugangspunkt AP2 zu senden.

Wenn diese Verbindungsdaten vom übernehmenden Funkzugangspunkt AP2 empfangen und verarbeitet sind, ist der Handover beendet (S6), und der Datenaustausch kann zwischen Teilnehmerstation MS und übernehmenden Funkzugangspunkt AP2 weiter gehen (S7).

Wenn sich im Stadium S4 herausstellt, dass zu der empfangenen Bezeichnung des abgebenden Funkzugangspunkts AP1 keine Adresse in der Datenbank DB gespeichert ist, der abgebende Funkzugangspunkt AP1 dem übernehmenden Funkzugangspunkt AP2 also "unbekannt" ist, so können die Verbindungsdaten nicht über das Leitungsnetz FN angefordert werden. In diesem Fall müssen sie zwischen der Teilnehmerstation MS und dem übernehmenden Funkzugangspunkt AP2 im Dialog erneut ausgehandelt werden (S9). Dieser Dialog kann im wesentlichen den Austausch der gleichen Meldungen umfassen, die auch beim Neuaufbau einer Verbindung zur Festlegung von deren Parametern verwendet werden.

Darüber hinaus wird in zeitlichem Zusammenhang mit diesem Dialog auch die Adresse des abgebenden Funkzugangspunkts AP1 übertragen, die dieser zuvor beim Aufbau der Verbindung an die Teilnehmerstation MS übermittelt hat. Im HIPERLAN/2-Standard existiert zu diesem Zweck eine eigene Subprozedur RLC_Info, die in dem Diagramm der Fig. 3 vor dem Dialog (S9) durchgeführt wird, sich aber auch an ihn anschließen könnte.

Nach Durchführung des Dialogs (S9) verfügt der übernehmende Knoten AP2 somit sowohl über die zu Beginn des Handovers übertragene Bezeichnung als auch über die Adresse des abgebenden Knotens AP1 und ist daher in der Lage, in Schritt S10 diese in der Datenbank DB abzuspeichern. Damit endet der Handover (S6), und der Datenaustausch wird mit dem übernehmenden Funkzugangspunkt fortgesetzt (S7).

Wenn zu einem späteren Zeitpunkt erneut ein Handover vom Funkzugangspunkt AP1 an den Funkzugangspunkt AP2 stattfindet, so ist dann AP1 bei AP2 bekannt, und die Verbindungsdaten können - schneller und effektiver als im Funkdialog - über das Leitungsnetz FN übertragen werden.

So wird durch die Erfindung ein Funkkommunikationssystem geschaffen, dessen Funkzugangspunkte im Laufe des Betriebs selbsttätig die Adressen benachbarter Funkzugangspunkte erlernen.

Wenn die Topologie eines solchen Übertragungsnetzwerks durch Hinzufügen oder Verlagern von Zellen verändert wird, so genügt es für die Funktionsfähigkeit des Netzwerks, dass jedem einzelnen Funkzugangspunkt eine Bezeichnung zugewiesen wird, die sich von den Bezeichnungen der Funkzugangspunkte aller benachbarten Zellen unterscheidet. Wenn das Netzwerk tiefgreifend umstrukturiert wird und die Bezeichnungen einzelner Zugangspunkte geändert werden, so genügt es, jeweils die Datenbanken der benachbarten Funkzugangspunkte zu löschen, denn ihr Inhalt wird im Laufe einiger weniger Handover-Prozesse in aktualisierter Form wieder hergestellt.

Wenn lediglich eine Zelle mit einer neuen Bezeichnung hinzugefügt wird, ohne dass sich die Bezeichnungen benachbarter Zellen ändern, so ist sogar keinerlei Eingriff an den Datenbanken erforderlich, da die Einträge der Datenbanken, die bereits zuvor vorhandenen Zellen entsprechen, ihre Gültigkeit behalten und ein der neuen Zelle entsprechender weiterer Eintrag automatisch mit dem ersten Handover aus dieser neuen Zelle hinzugefügt wird.

Im Rahmen der nachfolgenden Patentansprüche sind zahlreiche Abwandlungen des oben beschriebenen Beispiels möglich. So können z.B. anstelle von einzelnen Datenbanken DB jeweils am Ort der Funkzugangspunkte AP1, AP2, AP eine oder mehrere zentralisierte Datenbanken vorgesehen sein, auf die jeweils mehrere geographisch benachbarte Funkzugangspunkte Zugriff haben, deren Bezeichnungen jeweils untereinander und von den Bezeichnungen der Funkzugangspunkte der angrenzenden Zellen verschieden sind.

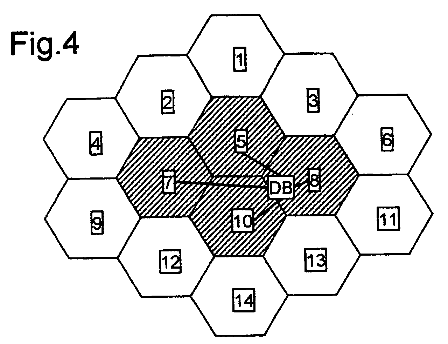

Fig. 4 zeigt hierfür ein Beispiel. Es zeigt eine Mehrzahl von Zellen, deren Funkzugangspunkte Zahlen von 1 bis 14 als Bezeichnungen haben. Die Funkzugangspunkte 5, 7, 8, 10 der schraffiert dargestellten, inneren Zellen verwenden eine gemeinsame Datenbank DB. Wenn man annimmt, dass der Funkzugangspunkt 2 für diese Datenbank DB unbekannt ist, so wird in der Datenbank DB ein Eintrag für den Funkzugangspunkt 2 angelegt, wenn von diesem ein Handover zum Funkzugangspunkt 5 stattfindet. Wenn anschließend aus der gleichen Zelle ein Handover zum Funkzugangspunkt 7 stattfindet, so ist für diesen letzteren, da er auf die gleiche Datenbank zugreift wie der Funkzugangspunkt 5, der Funkzugangspunkt 2 bekannt, und die Verbindungsdaten können direkt über das Leitungsnetz übertragen werden.

## Patentansprüche

1. Verfahren zum Übergeben einer Teilnehmerstation (MS) zwischen zwei über eine Leitung (FN) verbundenen Funkzugangspunkten (AP1, AP2, AP) eines zellularen Funkkommunikationssystems, mit den Schritten
a) Übertragen von in Zuordnung zu dem abgebenden Funkzugangspunkt (AP1) gespeicherter, für den Austausch von Nutzdaten mit der Teilnehmerstation (MS) benötigter Information an den übernehmenden Funkzugangspunkt (AP2),
b) Weiterführen des Austauschs von Nutzdaten mit der Teilnehmerstation (MS) über den übernehmenden Funkzugangspunkt (AP2) anhand dieser benötigten Information,
**dadurch gekennzeichnet, dass**
c) die Teilnehmerstation (MS) eine Steuerinformation an den übernehmenden Funkzugangspunkt überträgt, und dass
d) anhand dieser Steuerinformation entschieden wird, ob die benötigte Information in Schritt a) über die Leitung (FN) oder von der Teilnehmerstation (MS) an den übernehmenden Funkzugangspunkt (AP2) übertragen wird.

2. Verfahren nach Anspruch 1, **dadurch gekennzeichnet, dass** wenn die benötigte Information in Schritt a) über die Leitung (FN) übertragen wird, der übernehmende Funkzugangspunkt (AP2) eine Bezeichnung der Teilnehmerstation (MS), die zuvor von der Teilnehmerstation (MS) empfangen worden ist, an den abgebenden Netzzugangspunkt (AP1) überträgt.

3. Verfahren nach Anspruch 1 oder 2, **dadurch gekennzeichnet, dass** die Steuerinformation eine Bezeichnung des abgebenden Funkzugangspunkts (AP1) ist.

4. Verfahren nach Anspruch 3, **dadurch gekennzeichnet, dass** die von der Teilnehmerstation (MS) übertragene Bezeichnung des abgebenden Funkzugangspunkts (AP1) innerhalb des Funkkommunikationssystems eindeutig ist.

5. Verfahren nach Anspruch 3, **dadurch gekennzeichnet, dass** die von der Teilnehmerstation (MS) übertragene Bezeichnung des abgebenden Funkzugangspunkts (AP1) innerhalb des Funkkommunikationssystems nicht eindeutig ist und am übernehmenden Funkzugangspunkt (AP2) in eine eindeutige Bezeichnung oder Adresse umgesetzt wird.

6. Verfahren nach Anspruch 5, **dadurch gekennzeichnet, dass** die in Schritt c) zu übertragende Bezeichnung allen Funkzugangspunkten (AP1, AP2, AP) vorab zugeteilt wird, wobei eine gleiche Bezeichnung mehreren Funkzugangspunkten zugeteilt wird, die nicht benachbarte Zellen versorgen.

7. Verfahren nach Anspruch 5 oder 6, **dadurch gekennzeichnet, dass** der übernehmende Funkzugangspunkt (AP2) prüft, ob eine der übertragenen Bezeichnung entsprechende Adresse in einer zugeordneten Datenbank (DB) gespeichert ist (S4), und die Übertragung (S5) der benötigten Information an den übernehmenden Funkzugangspunkt (AP2) über die Leitung (FN) nur veranlasst wird, wenn die Adresse in der Datenbank (DB) gespeichert ist.

8. Verfahren nach Anspruch 7, **dadurch gekennzeichnet, dass** wenn eine der übertragenen Bezeichnung entsprechende Adresse in der Datenbank nicht gespeichert ist, ein Dialog (S8) zwischen der Teilnehmerstation (MS) und dem übernehmenden Funkzugangspunkt (AP2) durchgeführt wird, in dem die benötigte Information ermittelt wird.

9. Verfahren nach Anspruch 8, **dadurch gekennzeichnet, dass** in dem Dialog (S8) ferner die Adresse des abgebenden Funkzugangspunkts (AP1) an den übernehmenden Funkzugangspunkt (AP2) übermittelt und in der Datenbank (DB) gespeichert wird.

10. Verfahren nach einem der vorhergehenden Ansprüche, **dadurch gekennzeichnet, dass** das Funkkommunikationssystem ein IP-Netzwerk umfasst und dass die Adresse eine IP-Adresse ist.

11. Funkzugangspunkt (AP1, AP2, AP) für ein zellulares Funkkommunikationssystem, mit einer ersten Schnittstelleneinrichtung (DLC, PHY) für den Funk-Datenaustausch mit wenigstens einer Teilnehmerstation (MS) und einer zweiten Schnittstelleneinrichtung (PHY) für den Datenaustausch über eine Leitung (FN) mit wenigstens einem anderen Funkzugangspunkt, **dadurch gekennzeichnet, dass** der Funkzugangspunkt (AP1, AP2, AP) eingerichtet ist, bei der Übergabe einer Teilnehmerstation (MS) an ihn für die Weiterführung einer mit der Teilnehmerstation (MS) bestehenden Verbindung benötigte Information in Abhängigkeit von einer von der Teilnehmerstation empfangenen Steuerinformation wahlweise über die Leitung (FN) oder von der Teilnehmerstation (MS) zu empfangen.

12. Funkzugangspunkt nach Anspruch 11, **dadurch gekennzeichnet, dass** ihm eine Datenbank (DB) für Einträge zugeordnet ist, die jeweils eine im Datenverkehr über die erste Schnittstelleneinrichtung (DLC, PHY) verwendete Bezeichnung eines Funkzugangspunktes in Verbindung mit einer im Datenverkehr über die zweite Schnittstelleneinrichtung (PHY) verwendeten Bezeichnung dieses Funkzugangspunktes enthalten.

13. Funkzugangspunkt nach Anspruch 11 oder 12, **dadurch gekennzeichnet, dass** die im Datenverkehr über die zweite Schnittstelleneinrichtung verwendeten Bezeichnungen IP-Adressen sind.

14. Funkzugangspunkt nach Anspruch 11, 12 oder 13, **dadurch gekennzeichnet, dass** die Einträge der Datenbank anhand von zwischen dem Funkzugangspunkt (AP2) und einer Teilnehmerstation (MS) ausgetauschter Daten aktualisierbar und/oder erzeugbar sind.

## Claims

1. Method for handing over a mobile station (MS) between two access points (AP1, AP2, AP) of a cellular radio communication system connected via a link (FN), with the steps
a) Transfer of information stored in assignment to the issuing access point (AP1), needed for the exchange of user data with the mobile station (MS) to the accepting access point (AP2),
b) Continuation of the exchange of user data with the mobile station (MS) via the accepting access point (AP2) on the basis of this required information, **characterized in that**
c) the mobile station (MS) transfers control information to the accepting access point and that d) a decision is made on the basis of this control information as to whether the information needed in step a) will be transmitted via the link (FN) or from the mobile station (MS) to the accepting access point (AP2).

2. Method according to Claim 1, **characterized in that**, when the information needed in step a) is transferred via the link (FN), the accepting access point (AP2) transfers an identification of the mobile station (MS) that has been received previously by the mobile station (MS) to the issuing access point (AP1).

3. Method according to Claim 1 or 2, **characterized in that** the control information is an identification of the issuing access point (AP1).

4. Method according to Claim 3, **characterized in that** the identification of the issuing access point (AP1) transmitted from the mobile station (MS) is unique within the radio communication system.

5. Method according to Claim 3, **characterized in that** the identification of the issuing access point (AP1) transmitted from the mobile station (MS) is not unique within the radio communication system and is converted at the accepting access point (AP2) into a unique identification or address.

6. Method according to Claim 5, **characterized in that** the identification to be transmitted in step c) is assigned beforehand to all access points (AP1, AP2, AP), with the same identification being assigned to a number of access points that do not serve adjacent cells.

7. Method in accordance with Claim 5 or 6, **characterized in that** the accepting access point (AP2) checks whether an address corresponding to the identification transmitted is stored in an assigned database (DB) (S4), and the transmission (S5) to the accepting access point (AP2) of the information needed via link (FN) is only initiated if the address is stored in the database (DB).

8. Method according to Claim 7, **characterized in that**, when an address corresponding to the identification transmitted is not stored in the database, a dialog (S8) between the mobile station (MS) and the accepting access point (AP2) is executed, in which the information needed is determined.

9. Method according to Claim 8, **characterized in that** in the dialog (S8) the address of the issuing access point (AP1) is also transmitted to the accepting access point (AP2) and stored in the database (DB).

10. Method in accordance with one of the previous claims, **characterized in that** the radio communication system comprises an IP network and that the address is an IP address.

11. Access point (AP1, AP2, AP) for a cellular radio communication system, with a first interface device (DLC, PHY) for radio data exchange with at least one mobile station (MS) and a second interface device (PHY) for data exchange via a link (FN) with at least one other access point, **characterized in that** the access point (AP1, AP2, AP) is set up, for the handover of a mobile station (MS) to receive the information needed transmitted to it for continuation of a connection existing with the mobile station (MS) depending on control information received from the mobile station optionally via the link (FN) or from the mobile station (MS).

12. Access point according to Claim 11, **characterized in that** it is assigned a database (DB) for entries that contains one identification used in data traffic via the first interface device (DLC, PHY) of an access point and one identification used in conjunction with data traffic via the second interface device (PHY) of this access point.

13. Access point according to Claim 11 or 12, **characterized in that** the identifications used in data traffic via the second interface device are IP addresses.

14. Access point according to Claim 11, 12 or 13, **characterized in that** the entries in the database can be updated and/or created on the basis of data exchanged between the access point (AP2) and a mobile station (MS).

## Revendications

1. Procédé pour l'intercommunication d'une station d'abonné (MS) entre deux points d'accès radio (AP1, AP2, AP) reliés par une ligne (FN) d'un système cellulaire de radiocommunication comportant les étapes :
a) transmission d'information mémorisée en attribution au point d'accès radio (AP1) émetteur et utilisée pour l'échange de données utiles avec la station d'abonné (MS) au point d'accès radio (AP2) récepteur,
b) poursuite de l'échange de données utiles avec la station d'abonné (MS) au moyen du point d'accès radio (AP2) récepteur à l'aide de cette information utilisée,
**caractérisé en ce que**
c) la station d'abonné (MS) transmet une information de commande au point d'accès radio récepteur et **en ce que**
d) on décide à l'aide de cette information de commande si l'information utilisée est transmise à l'étape a) par la ligne (FN) ou par la station d'abonné (MS) au point d'accès radio (AP2) récepteur.

2. Procédé selon la revendication 1, **caractérisé en ce que**, lorsque l'information utilisée est transmise à l'étape a) par la ligne (FN), le point d'accès radio (AP2) récepteur transmet une désignation de la station d'abonné (MS), qui a été réceptionnée auparavant par la station d'abonné (MS), au point d'accès réseau (AP1) émetteur.

3. Procédé selon la revendication 1 ou 2, **caractérisé en ce que** l'information de commande est une désignation du point d'accès radio (AP1) émetteur.

4. Procédé selon la revendication 3, **caractérisé en ce que** la désignation, transmise par la station d'abonné (MS), du point d'accès radio (AP1) émetteur à l'intérieur du système de radiocommunication est sans ambiguïté.

5. Procédé selon la revendication 3, **caractérisé en ce que** la désignation, transmise par la station d'abonné (MS), du point d'accès radio (AP1) émetteur à l'intérieur du système de radiocommunication n'est pas sans ambiguïté et est transformée au point d'accès radio (AP2) récepteur en une désignation ou adresse sans ambiguïté.

6. Procédé selon la revendication 5, **caractérisé en ce que** la désignation à transmettre à l'état c) est délivrée auparavant à tous les points d'accès radio (AP1, AP2, AP), une désignation identique étant délivrée à plusieurs points d'accès radio qui alimentent des cellules non voisines.

7. Procédé selon la revendication 5 ou 6, **caractérisé en ce que** le point d'accès radio (AP2) récepteur vérifie si une adresse correspondant à la désignation transmise est mémorisée (S4) dans une banque de données (DB) attribuée, et la transmission (S5) de l'information utilisée au point d'accès radio (AP2) récepteur par la ligne (FN) n'est demandée que si l'adresse est mémorisée dans la banque de données (DB).

8. Procédé selon la revendication 7, **caractérisé en ce que** si une adresse correspondant à la désignation transmise n'est pas mémorisée dans la banque de données, un dialogue (S8) est réalisé entre la station d'abonné (MS) et le point d'accès radio (AP2) récepteur où l'information utilisée est déterminée.

9. Procédé selon la revendication 8, **caractérisé en ce que** l'adresse du point d'accès radio (AP1) émetteur est également transmise dans le dialogue (S8) au point d'accès radio (AP2) récepteur et mémorisée dans la banque de données (DB).

10. Procédé selon l'une quelconque des revendications précédentes, **caractérisé en ce que** le système de radiocommunication comprend un réseau IP et **en ce que** l'adresse est une adresse IP.

11. Point d'accès radio (AP1, AP2, AP) pour un système cellulaire de radiocommunication, avec un premier appareil d'interface (DLC, PHY) pour l'échange de données radio avec au moins une station d'abonné (MS) et un second appareil d'interface (PHY) pour l'échange de données au moyen d'une ligne (FN) avec au moins un autre point d'accès radio, **caractérisé en ce que** le point d'accès radio (AP1, AP2, AP) est aménagé pour recevoir l'information nécessaire pour la poursuite d'une communication existante avec la station d'abonné (MS) lors de la connexion d'une station d'abonné (MS) avec le point, en fonction d'une information de commande reçue de la station d'abonné, au choix au moyen de la ligne (FN) ou de la station d'abonné (MS).

12. Point d'accès radio selon la revendication 11, **caractérisé en ce qu'**une banque de données (DB) est attribuée pour des inscriptions qui contiennent chacune une désignation, utilisée dans le trafic de données au moyen du premier appareil d'interface (DLC, PHY), d'un point d'accès radio en liaison avec une désignation, utilisée dans le trafic de données au moyen du second appareil d'interface (PHY), de ce point d'accès radio.

13. Point d'accès radio selon la revendication 11 ou 12, **caractérisé en ce que** les désignations utilisées dans le trafic de données au moyen du second appareil d'interface sont des adresses IP.

14. Point d'accès radio selon la revendication 11, 12, ou 13, **caractérisé en ce que** les inscriptions de la banque de données peuvent être actualisées et/ou générées à l'aide de données échangées entre le point d'accès radio (AP2) et une station d'abonné (MS).
